# EUROPEAN PATENT SPECIFICATION

(11) **EP 3 287 411 B1**
(45) Date of publication and mention of the grant of the patent: **23.10.2019**
(21) Application number: 17179271.6
(22) Date of filing: 03.07.2017
(51) Int. Cl.: B66F 11/04, B66F 17/00, B66C 23/70

(54) **TELESCOPIC CONNECTION COMPONENT AND AERIAL WORK PLATFORM**
TELESKOPISCHE VERBINDUNGSKOMPONENTE UND HUBARBEITSBÜHNE
COMPOSANT DE CONNEXION TÉLESCOPIQUE ET PLATEFORME DE TRAVAIL ÉLÉVATRICE

(30) Priority: 24.08.2016 CN 201610726254
(43) Date of publication of application: 28.02.2018
(73) Proprietor: Zhejiang Dingli Machinery Co., LTD., Leidian Town Deqing, Zhejiang 313219 (CN)
(72) Inventor: Xu, Shugen, Zhejiang, 313219 (CN)
(74) Representative: Hoffmann Eitle

(56) References cited:
- EP-A1- 0 596 498
- EP-A1- 1 466 862
- DE-C1- 3 326 673
- JP-A- 2006 036 526
- US-A- 4 744 718
- US-A- 4 775 029

## Description

### FIELD OF THE INVENTION

The present invention relates to field of engineering mechanics and more particularly, relates to an engineering work vehicle, and most particularly, relates to a telescopic connection component and aerial work platform.

### BACKGROUND OF THE INVENTION

Aerial work platform is an advanced aerial working mechanical device, and is capable of significantly improving efficiency, safety, and comfort of operators at height, and is also capable of reducing labor. Accordingly, it is widely employed in developed countries. This aerial work platform is also extensively used in China in many fields such as urban street lamp maintenance, tree trimming or the like. With rapid development of Chinese economy, aerial work platform is increasingly required in many situations such as engineering construction, industry installation, equipment repair, workshop maintenance, ship manufacture, electric power, municipal construction, airport, communications, city park, and transportation.

In a conventional aerial work platform, the forearm for connecting the operation platform and main arm (for example a telescopic connection component) is of a parallelogram construction. In this construction, two connecting points of the operation platform are hinged to two corresponding connecting points of the forearm connected with the main arm through two connection arms. In addition, a line defined by the two connecting points of the operation platform is parallel to another line defined between the two connecting points of the forearm, thus forming a parallelogram by these four connecting points of the platform and forearm. Luffing and levelling function is given to the forearm by equipping with a luffing cylinder and levelling cylinder. As a prior art forearm is of a parallelogram construction, its horizontal reach is seriously restricted by the length of the connection arm. In addition, the aerial work platform has relatively less flexibility in the working area due to its parallelogram construction of forearm. In addition, US 4744718A discloses an aircraft service vehicle, whereas US 4775029A discloses a collapsible boom lift with a vehicle, a telescopic transmission component, a telescopic connection component, an operation platform, two supporting members, two luffing cylinders and two levelling cylinders.

Accordingly, there is need for providing an improved connection structure for coupling the operation platform and main arm together and a corresponding aerial work platform to overcome drawbacks of prior art.

### SUMMARY OF THE INVENTION

An object of the present invention is to solve above problems by providing an aerial work platform according to the independent claim 1. This aerial work platform comprises a telescopic connection component. The telescopic connection component has a relatively longer horizontal reach thus widening working area of the aerial work platform. Moreover, the telescopic connection component owns higher structural strength and stability, thus greatly ensuring safety of the aerial work platform.

According to the invention, the aerial work platform includes a vehicle, a telescopic transmission component, a telescopic connection component, and an operation platform all of which are movably connected with each other in order. A supporting member is disposed between the vehicle and telescopic transmission component, and similarly, another supporting member is placed between the telescopic transmission component and telescopic connection component. The telescopic connection component includes: an outer arm, an inner arm slidably disposed inside the outer arm and capable of being moved out from one end of the outer arm, and a forearm telescopic cylinder disposed between the outer arm and inner arm.

Specifically, the forearm telescopic cylinder includes a cylinder body and a piston rod slidably disposed into the cylinder body. The cylinder body is secured onto the outer arm, and an extension end of the piston rod is secured onto the inner arm.

Preferably, the cylinder body is secured onto an outer wall of the outer arm, and an extension end of the piston rod is secured onto an outer wall of the inner arm.

A supporting member disposed between the telescopic transmission component and telescopic connection component is a luffing cylinder.

Another supporting member disposed between the telescopic transmission component and telescopic connection component is a first levelling cylinder. One end, which is connected to the telescopic transmission component, of the telescopic connection component, is hinged to a forearm head. One end of the first levelling cylinder is hinged to the telescopic transmission component, while the other end is hinged to the forearm head.

Furthermore, the telescopic connection component further includes a forearm luffing cylinder one end of which is hinged to the forearm head, while the other end thereof is hinged to the outer wall of the outer arm. By this means, the forearm head, outer arm and forearm luffing cylinder constitute a triangle luffing mechanism.

Furthermore, a third levelling cylinder is disposed between the telescopic connection component and operation platform. One end of the third levelling cylinder is hinged to the inner arm, whereas the other end thereof is hinged to a rotary cylinder secured onto the operation platform.

Optionally, an angle sensor cooperating with the third levelling cylinder is provided on the rotary cylinder.

Optionally, a second levelling cylinder is positioned between the forearm head and telescopic connection component. One end of the second levelling cylinder is hinged to the forearm head, while the other end thereof is hinged to the outer wall of the outer arm. A cavity of the second levelling cylinder communicates with a cavity of the third levelling cylinder by means of an oil tube.

Compared with prior art techniques, the present invention brings the following good effects:

In present invention, the telescopic connection component includes an outer arm, an inner arm slidably disposed inside the outer arm and capable of being moved out from one end of the outer arm, and a forearm telescopic cylinder disposed between the outer arm and inner arm. As a result, when driven by the forearm telescopic cylinder, the inner arm will be able to move into and out of the outer arm. During this process, the inner arm is capable of moving out of the outer arm, the horizontal reach of the operation platform connected to the inner arm will be increased, thereby increasing working range.

Secondly, in present invention, a levelling mechanism is disposed between the telescopic transmission component and telescopic connection component, and another levelling mechanism is similarly placed between the telescopic connection component and operation platform. This ensures stable movement of the operation platform along any direction in a horizontal plane during operation, thus maintaining security of operators.

Thirdly, for the telescopic connection component, its inner arm is movably disposed in the outer arm, a supporting member is disposed between the telescopic transmission component and telescopic connection component, and similarly, another supporting member is placed between the telescopic connection component and the operation platform. These constructions of the telescopic connection component bring higher structural strength and stability for the aerial work platform and accordingly, they also improve safety of the aerial work platform.

In a summary, the telescopic connection component has longer horizontal reach so that the operation platform is capable of moving to a further region in a horizontal direction, thus increasing working range of the aerial work platform. In addition, the telescopic connection component has higher structural strength and stability and accordingly, it also improves safety of the aerial work platform.

### BRIEF DESCRIPTION OF THE DRAWINGS

Figure 1 shows a schematic view of an aerial work platform in accordance with a typical embodiment of the invention;
Figure 2 shows a partially enlarged view of portion M of figure 1;
Figure 3 illustrates another view of a front component of the aerial work platform of figure 1, the front component including a telescopic connection component, an operation platform, and relevant connection components;
Figure 4 shows a schematic view of a telescopic transmission component of the aerial work platform of figure 1;
Figure 5 shows a partially enlarged view of portion A of figure 4;
Figure 6 shows a partially enlarged view of portion B of figure 4;
Figure 7 shows a view of the telescopic transmission component of figure 4 in an expanded configuration;
Figure 8 denotes a structural view of internal major transmission members of the telescopic transmission component of figure 4, the major transmission members including a first sprocket wheel, a second sprocket wheel, a rope-expanding chain, a rope-retracting chain, and a retractable cylinder;
Figure 9 shows a schematic view of internal major transmission members of the telescopic transmission component of figure 4;
Figure 10 shows a schematic view of internal major transmission members of the telescopic transmission component of figure 4;
Figure 11 denotes a structural view of the retractable cylinder of the telescopic transmission component of figure 4;
Figure 12 shows a partially enlarged view of portion C of figure 11; and
Figure 13 illustrates a view of a front component of an aerial work platform according to another embodiment of the invention.

### DETAILED DESCRIPTION OF THE INVENTION

The present invention will be further described below with reference to accompanied drawings and exemplary embodiments. Here, identical numerals represent the identical components. In addition, detailed description of prior art will be omitted if it is unnecessary for illustration of the features of the present invention.

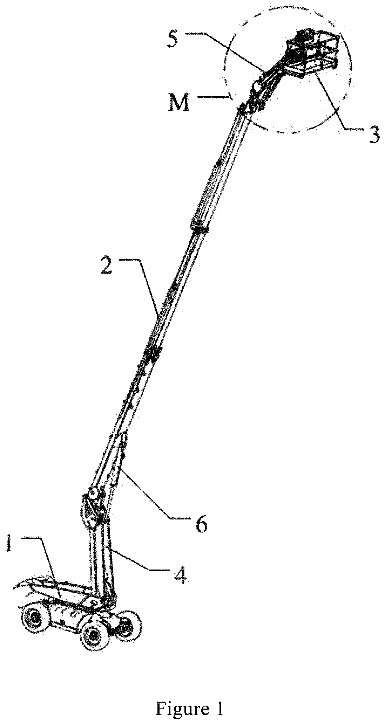

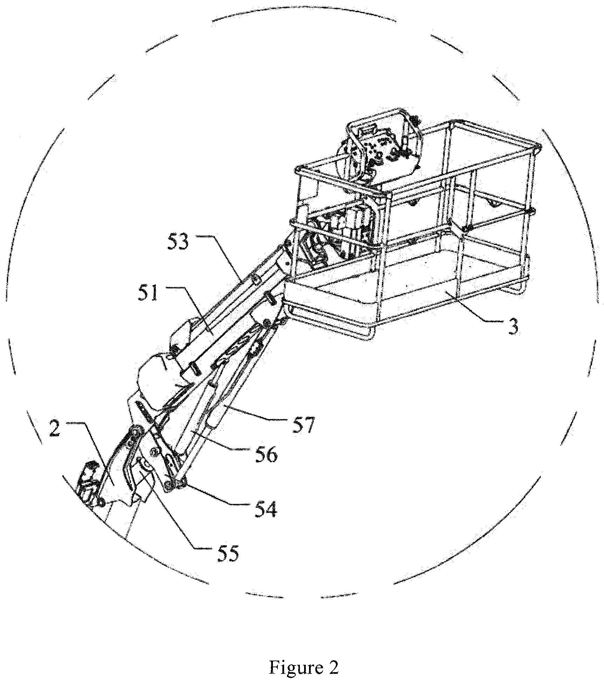

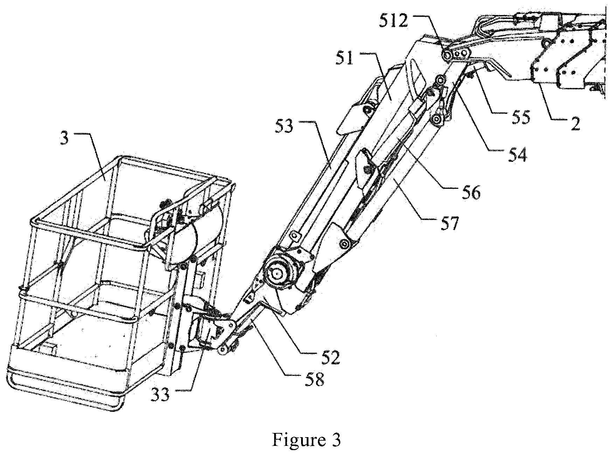

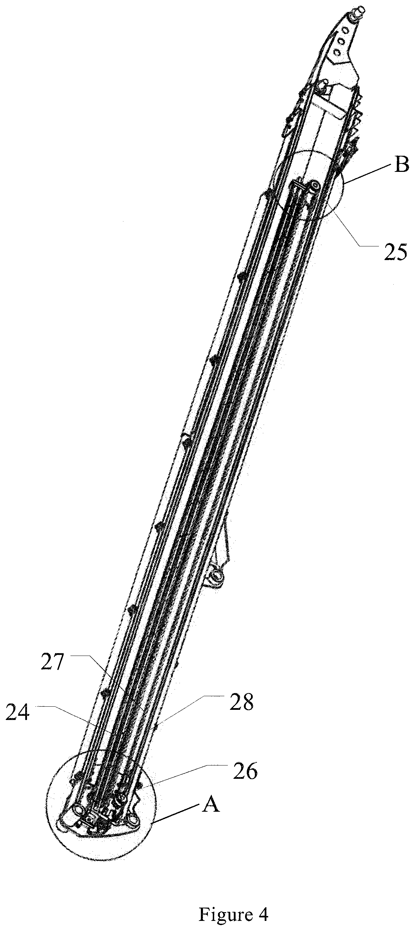

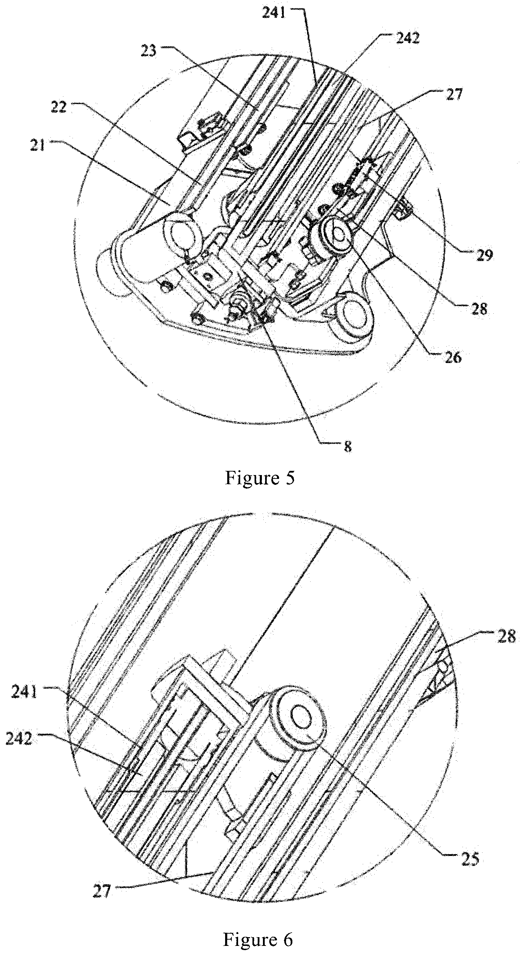

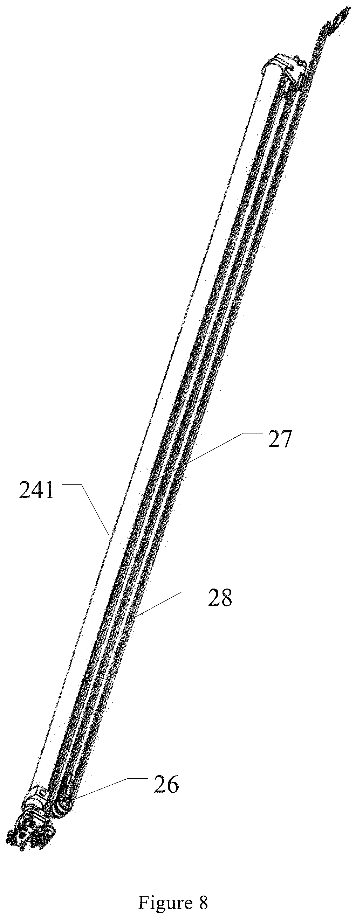

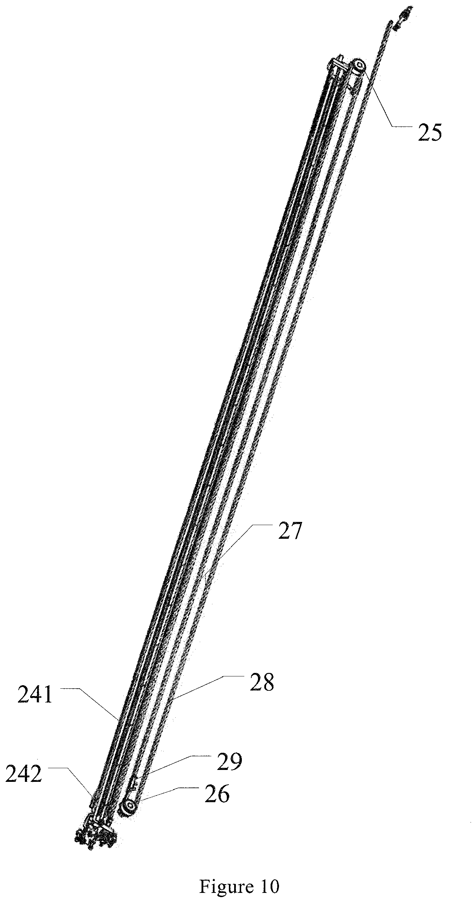

Figures 1-12 show a typical embodiment of an aerial work platform of the present invention. The aerial work platform incudes a vehicle 1, a telescopic transmission component 2 pivotably installed on the vehicle 1, and an operation platform 3 connected to a distal end of the telescopic transmission component 2 via a telescopic connection component 5.

It is noted that the vehicle 1 includes a vehicle frame, a driving system disposed on the vehicle frame, and a control box electrically connected to the driving system. The control box is disposed at a lateral side of the vehicle frame in a rotary manner. The driving system includes a power system, a transmission mechanism, a control system, a driving mechanism, and a wheel assembly. The control box is also electrically connected with the control system. In addition, relevant control device electrically connected to the control system may be provided on the operation platform.

The telescopic connection component 5 includes an outer arm 51, an inner arm 52 slidably disposed inside the outer arm 51 and capable of being moved out from one end of the outer arm 51, and a forearm telescopic cylinder 53 disposed between the outer arm 51 and inner arm 52.

It is noted that the forearm telescopic cylinder 53 includes a cylinder body (not shown) and a piston rod (not shown) slidably disposed into the cylinder body. Preferably, the cylinder body is secured onto an outer wall of the outer arm 51, and an extension end of the piston rod is secured onto an outer wall of the inner arm 52.

A first levelling cylinder 55 is disposed between the telescopic transmission component 2 and telescopic connection component 5. A forearm head 54 is hinged to one end, which is connected to the telescopic transmission component 2, of the telescopic connection component 5. One end of the first levelling cylinder 55 is hinged to the telescopic transmission component 2, while the other end thereof is hinged to the forearm head 54. The telescopic connection component 5 further includes a forearm luffing cylinder 57 one end of which is hinged to the forearm head 54, while the other end thereof is hinged to the outer wall of the outer arm 51. By this means, the forearm head 54, outer arm 51 and forearm luffing cylinder 57 constitute a triangle luffing mechanism.

It is noted that the forearm head 54, outer arm 51 and telescopic transmission component 2 are hinged together by a pin 512. The first levelling cylinder 55, forearm head 54, forearm luffing cylinder 57 and outer arm 51 constitute a four-bar linkage. Moreover, the first levelling cylinder 55 may operate electrically or hydraulically. In case operating under electric manner, an angle sensor (not shown) matched with the first levelling cylinder 55 is installed on the pin 512 which hinges the forearm head 54, outer arm 51 and telescopic transmission component 2 together. In case operating under hydraulic manner, a hydraulic levelling device matched with the first levelling cylinder 55 is disposed on the telescopic transmission component 2. Preferably, the first levelling cylinder 55 works in electrical levelling manner.

Here, the forearm head 54 may be leveled by pushing and pulling motion of the first levelling cylinder 55 upon the head 54. Specifically, an angle sensor installed on the forearm head 54 sets an angle of the head 54 as zero. During luffing of the telescopic transmission component 2, the forearm head 54 will tilt accordingly. As a result, angle signal of the forearm head 54 will be sent to a corresponding controller through the angle sensor. After receiving the signal, the controller will generate a corresponding command to cause telescopic motion of the first levelling cylinder 55, thereby realizing levelling of the forearm head 54. In other words, the forearm head 54 is controlled to be oriented at its predefined zero angle. In addition, up and down luffing of the telescopic connection component 5 may also be realized by telescopic movement of the forearm luffing cylinder 57.

Furthermore, a third levelling cylinder 58 is disposed between the telescopic connection component 5 and operation platform 3. One end of the third levelling cylinder 58 is hinged to the inner arm 52, whereas the other end thereof is hinged to a rotary cylinder 33 secured onto the operation platform 3.

Preferably, a second levelling cylinder 56 is positioned between the forearm head 54 and telescopic connection component 5. One end of the second levelling cylinder 56 is hinged to the forearm head 54, while the other end thereof is hinged to the outer wall of the outer arm 51. A cavity of the second levelling cylinder 56 communicates with a cavity of the third levelling cylinder 58 by means of an oil tube.

It is noted that arrangement of the second levelling cylinder 56 and third levelling cylinder 58 avoids tilting of the operation platform 3 during luffing of the telescopic connection component 5. In other words, the operation platform 3 is always maintained at a horizontal location during luffing of the telescopic connection component 5. Accordingly, the second levelling cylinder 56 and third levelling cylinder 58 have a second level of levelling function (the first levelling cylinder 55 and associated device realize a first level of levelling function). As the cavity of the second levelling cylinder 56 communicates with that of the third levelling cylinder 58 by means of an oil tube, levelling may be achieved by adjusting telescopic motion of the second and third levelling cylinders 56 and 58. The detailed levelling processing is described below. When the telescopic connection component 5 luffs upwardly, a telescopic rod of the forearm luffing cylinder 57 comes out and at the same time, a telescopic rod of the second levelling cylinder 56 also comes out. At this time, hydraulic medium inside a rod chamber of the second levelling cylinder 56 flows under pressure into a rod chamber of the third levelling cylinder 58. Next, a telescopic rod of the third levelling cylinder 58 retracts, and hydraulic medium contained inside the non-rod chamber of the third levelling cylinder 58 flows into a non-rod chamber of the second levelling cylinder 56 through an oil tube so as to realize levelling by balancing pressure inside relevant chambers of the second and third levelling cylinders 56 and 58. This principle also applies when the telescopic connection component 5 luffs downwardly except for flowing direction of hydraulic medium and movement direction of relevant components. Here, cross section areas of the cylinders, telescopic rods of the second and third levelling cylinders 56 and 58, and traveling distances of the telescopic rods thereof are predefined and matched among each other.

Reference is made to figures 1-12 illustrating a typical embodiment of a telescopic transmission component of the aerial work platform of the invention. The telescopic transmission component 2 includes a base arm 21, a second arm 22, a third arm, a telescopic cylinder 24, a rope-expanding chain 27, and a rope-retracting chain 28.

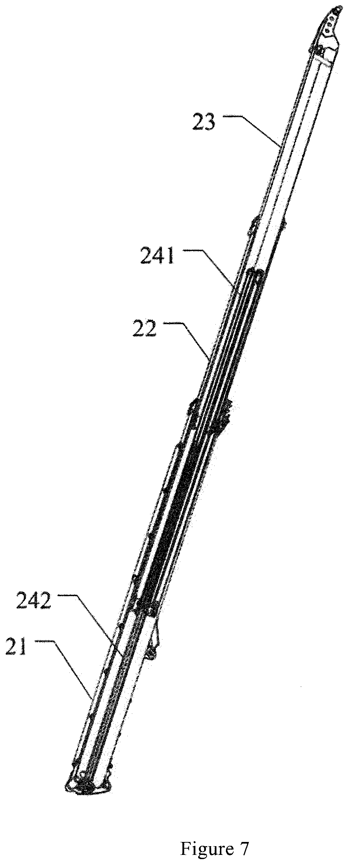

The second arm 22 is inserted into the base arm 21 and is able to move out of the base arm 21 (See an upper portion of figure 7) . The third arm 23 is inserted into the second arm 22 and is capable of coming out of an extension end of the same (See an upper portion of figure 7).

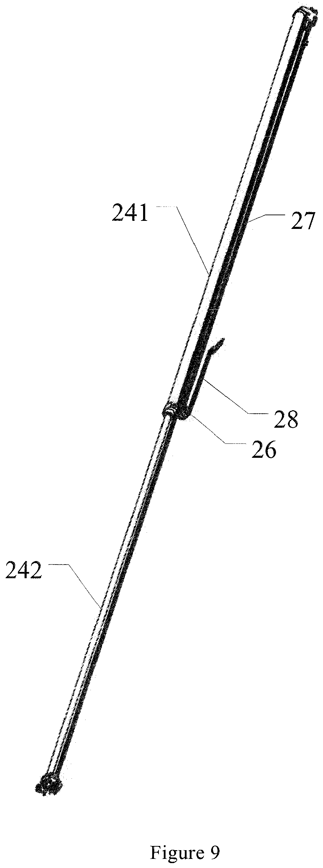

The telescopic cylinder 24 includes a cylinder barrel 241 secured onto the second arm 22 and a telescopic rod 242 inserted into the barrel 241. The telescopic rod 242 has a hollow arrangement 247 communicating with a cavity of the cylinder barrel 241. An oil guiding tube 245 is provided into the hollow arrangement 247 of the telescopic rod 242, and the extension end of the telescopic rod 242 is secured onto the base arm 21 (See a lower portion of figure 9). Preferably, an end surface of the extension end of the telescopic rod 242 is fixed to the base arm 21 through a mounting plate 8. A connection portion is provided on the cylinder barrel 241 at a location adjacent to the extension end of the telescopic rod 242 for securing the barrel 241 to the second arm 22. The connection portion may in the form of an axle hole. That is, the cylinder barrel 241 may be mounted on the second arm 22 by inserting a pin into said axle hole. Of course, the connection portion of the barrel 241 may also be designed to locate at other positions of the barrel 241, for example at a middle position.

Moreover, a first sprocket wheel 25 is provided on the telescopic cylinder 24, a second sprocket wheel 26 is provided on the second arm 22, and the second sprocket wheel 26 is closer to the extension end of the cylinder barrel 241 than does the first sprocket wheel 25. One end of the rope-expanding chain 27 is attached onto the base arm 21, while the other end thereof runs around the first sprocket wheel 25 and then is attached onto the third arm 23. In other words, the two ends of the rope-expanding chain 27 are both located below the first sprocket wheel 25(See orientation of figures). One end of the rope-retracting chain 28 is attached onto the third arm 23, while the other end thereof runs around the second sprocket wheel 26 and then is attached onto the base arm 21. In other words, the two ends of the rope-retracting chain 28 are both located above the second sprocket wheel 26 (See orientation of figures). Preferably, the first sprocket wheel 25 is located on a cylinder head, which cylinder head is located at one end away from an extension end, of the telescopic cylinder 24. The second sprocket wheel 26 is located on the second arm 22 at a location adjacent to the extension end of the telescopic rod 242. By this manner, the first and second sprocket wheels 25 and 26 are capable of being positioned above and below the cylinder barrel 241(See orientation of figures). This ensures stable movement of the cylinder barrel 241 and accordingly, it also ensures stable rotation and telescopic motion of relevant components. Of course, the first and second sprocket wheels 25 and 26 may also be positioned at other suitable locations. For instance, the first sprocket wheel 25 may be located at a middle area of the cylinder barrel 241, and the second sprocket wheel 26 may be placed on the second arm 22 at a location close to a middle portion of the cylinder barrel 241.

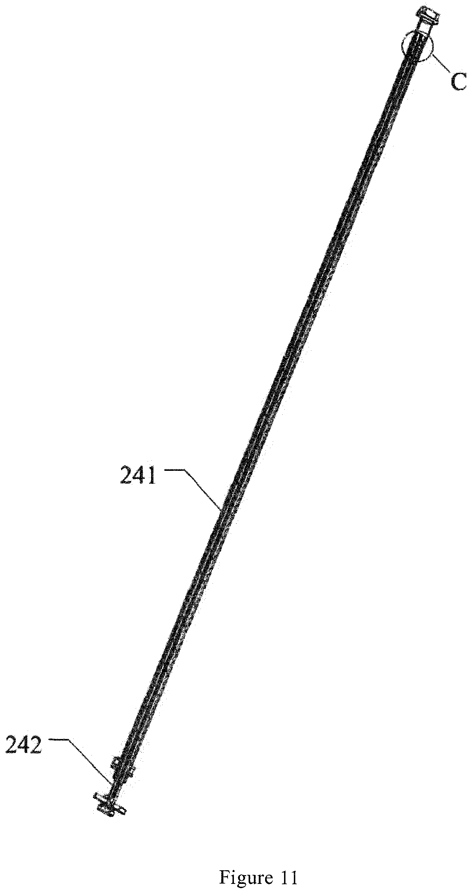

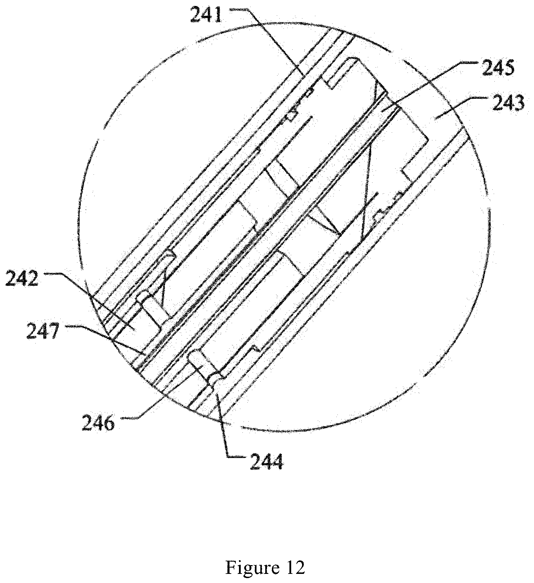

As shown in figures 11-12, an inner cavity of the cylinder barrel 241 of the telescopic cylinder 24 is separated to form a rod chamber 244 and a non-rod chamber 243. In other words, partial space of the inner cavity of the barrel 241 overlaps the telescopic rod 242 and thus forms the rod chamber 244. Partial space of the inner cavity of the barrel 241 doesn't overlap the rod 242 and locates at a upper right side (See figure 12) of a distal end of the telescopic rod, and accordingly, forms the non-rod chamber 243. The hollow arrangement 247 of the telescopic rod 242 communicates with the rod chamber 244 via a connection path 246. The hollow arrangement 247 of the rod 242 together with the oil guiding tube 245 inside the arrangement 247 is communicated with an external oil tube

Furthermore, one end of the rope-retracting chain 28 is attached onto the third arm 23 by means of a chain connection member 29, similarly, one end of the rope-expanding chain 27 is also attached onto the third arm 23 by means of the chain connection member 29, and the two ends are located at two sides of the chain connection member 29. By this manner, motions of the rope-expanding chain 27, rope-retracting chain 28 and third arm 23 are coordinated among each other. Alternatively, the rope-expanding chain 27 and rope-retracting chain 28 may be connected to the third arm 23 with different connective members.

Moreover, a chain detection device is provided on the rope-expanding chain 27 for real time detecting status of related chain. When a chain is broken or exceeds a predefined loose value, the chain detection device will generate alert signals to guarantee safety of the telescopic transmission component 2, and further guarantee safety of operators and other staff. In particular, the chain detection device may be disposed on the rope-expanding chain 27 at one end thereof where the chain 27 is connected to the base arm 21.

Preferably, all of the base arm 21, second arm 22 and third arm 23 are of hollow arrangement. It is noted that these arms are by no means limited to this hollow arrangement, and in fact they may be of other constructions.

Furthermore, these hollow arrangements of the base arm 21, second arm 22 and third arm 23 form a telescopic cavity into which the telescopic cylinder 24, first sprocket wheel 25, second sprocket wheel 26, rope-expanding chain 27 and rope-retracting chain 28 are received, thus leading to a compact structure for the telescopic transmission component 2, and further reducing wear and aging of the components, thereby extending lifetime. This also reduces repair and maintenance frequency and makes it more convenient to repair and maintain the same, thus decreasing related costs. In addition, to certain extent these components are not exposed outside and accordingly, risk of operators being injured due to unintentional collision with the components is also reduced. Of course, it is also feasible to place the telescopic cylinder 24, first sprocket wheel 25, second sprocket wheel 26, rope-expanding chain 27 and rope-retracting chain 28 outside the telescopic cavity (that is, place them onto the outer walls of the base arm 21, second arm 22 and third arm 23) .

In a summary, as the telescopic rod 242 is secured onto the base arm 21, when driven by suitable liquid medium, the cylinder barrel 241 will move upwardly together with the second arm 22 such that the second arm 22 will move out of the base arm 21. In turn, under the traction of the rope-expanding chain 27 and first sprocket wheel 25, the third arm 23 is pulled to move out of an upper end of the second arm 22. With continuous injection of the liquid medium into the cylinder barrel 241, the second arm 22 and third arm 23 will continue to move toward the upper end until desired travel distance or maximum predefined distance is reached. During this movement, the first sprocket wheel functions as a movable pulley, and in this situation, displacement of the third arm 23 relative to the base arm 21 is two times as long as a travel distance of the cylinder barrel 241 (the distance of the second arm 22 with respect to the base arm 21). In this case, telescopic distance is certainly extended.

When oil enters the rod chamber 244 of the cylinder barrel 241 through the hollow arrangement 247 of the telescopic rod 242, the barrel 241 will drive the second arm 22 to move together downwardly such that the second arm 22 will retract from the upper end of the base arm 21. In turn, the third arm 23 will retract into the second arm 22 when driven by the rope-retracting chain 28 and second sprocket wheel 26. With continuous oil injection into the telescopic rod 242, the second arm 22 and third arm 23 will continuously retract towards a low end until a desired retracting location or complete retracting location is reached. During this retracting, the second sprocket wheel 26 works as a movable pulley such that the displacement of the third arm 23 relative to the base arm 21 is two times as long as the travel distance of the cylinder barrel 241 (that is, the distance of the second arm 22 relative to the base arm 21).

Specifically, please refer to figure 1 and other related figures, the third arm 23 is hinged to the operation platform 3 by said telescopic connection component 5. In other words, the third arm 23 is hinged to the outer arm 51 of the telescopic connection component 5, and the inner arm 52 of the component 5 is connected with the operation platform 3. The telescopic connection component 5 helps the operation platform 3 move further along a horizontal direction. The base arm 21 is hinged to the vehicle 1 by the supporting arm 4 which is movably connected with relevant component of the vehicle 1. In addition, a luffing cylinder 6 is disposed between the base arm 21 and supporting arm 4. By this manner, the base arm 21, supporting arm 4 and luffing cylinder 6 connected therewith also together define a reliable triangle construction. This makes sure that the aerial work platform bears more stability and security.

When the aerial work platform requires extending its arms, the second and third arms 22, 23 of the telescopic transmission component 2 are controlled to extend. At this time, the operation platform 3 coupled with the telescopic transmission component 2 will also be extended when driven by the third arm 23. At this time, relevant luffing cylinder 6, supporting arm 4 and telescopic connection component 5 are also controlled to adjust angle or location of relevant arms until the operation platform 3 moves to a predefined working location or a maximum extension distance is reached.

Similarly, when the aerial work platform requires withdrawing its arms, the second and third arms 22, 23 of the telescopic transmission component 2 are controlled to retract. At this time, the operation platform 3 coupled with the telescopic transmission component 2 will also be retracted when driven by the third arm 23. At this time, relevant luffing cylinder 6, supporting arm 4 and telescopic connection component 5 are also controlled to adjust angle or location of relevant arms until the operation platform 3 moves to a predefined working location or returns to its original location without extension.

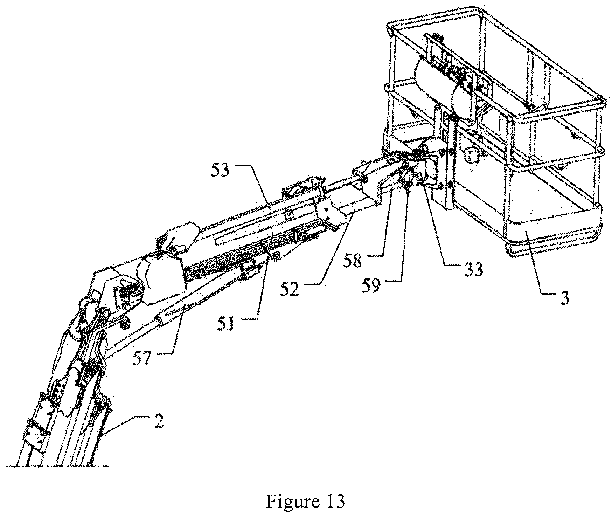

Moreover, please refer to figure 13 which illustrates another example of an aerial work platform of the invention. This example is different from the above example in that: a luffing cylinder 57 in place of relevant first level of levelling components of the above example and serving as a supporting member is disposed between the telescopic transmission component 2 and telescopic connection component 5; and the third levelling cylinder 58 works in an electrical levelling manner other than hydraulic levelling manner as described in above example, that is, an angle sensor 59 cooperating with the third levelling cylinder 58 is provided on the rotary cylinder 33.

When in operation, up and down luffing action of the telescopic connection component 5 is realized by telescopic motion of the luffing cylinder 57 located between the telescopic transmission component 2 and telescopic connection component 5. Levelling of the operation platform is conducted by telescopic motion of the third levelling cylinder 58, thus ensuring all time horizontal orientation of the platform.

Specifically, an angle sensor 59 installed on the rotary cylinder 33 sets a location of the operation platform 3 as zero. During luffing motion of the telescopic connection component 5, this angle sensor 59 will transmits electrical signals to a corresponding controller which when receives the signals, will send control command to cause telescopic motion of the third levelling cylinder 58, hence realizing levelling of the operation platform. In other words, it is maintained that the operation platform is always in its zero location.

In a summary, the telescopic connection component has longer horizontal reach so that the operation platform is capable of moving to a further region in a horizontal direction, thus increasing working range of the aerial work platform. In addition, the telescopic connection component has higher structural strength and stability and accordingly, it also improves safety of the aerial work platform.

Though various embodiments of the present invention have been illustrated above, a person of the art will understand that, variations and improvements made upon the illustrative embodiments fall within the scope of the present invention, and the scope of the present invention is only limited by the accompanying claims.

## Claims

1. An aerial work platform, comprising:
a vehicle (1);
a telescopic transmission component (2);
an operation platform (3); and
a telescopic connection component (5) for telescopically connecting the telescopic transmission component (2) and the operation platform (3) of the aerial work platform together;
the vehicle (1), telescopic transmission component (2), telescopic connection component (5), and operation platform (3) being movably connected with each other in sequence;
the telescopic connection component (5) comprising: an outer arm (51), an inner arm (52) slidably disposed inside the outer arm (51) and capable of being moved out from one end of the outer arm (51), and a forearm telescopic cylinder (53) disposed between the outer arm (51) and inner arm (52);
a supporting member being disposed between the vehicle (1) and telescopic transmission component (2), and another supporting member being placed between the telescopic transmission component (2) and telescopic connection component (5);
said another supporting member being disposed between the telescopic transmission component (2) and telescopic connection component (5) being a first levelling cylinder (55); one end, which is connected to the telescopic transmission component (2), of the telescopic connection component (5), being hinged to a forearm head (54) ; and one end of the first levelling cylinder (55) being hinged to the telescopic transmission component (2), while the other end being hinged to the forearm head (54);
the telescopic connection component (5) further comprising a forearm luffing cylinder (57) one end of which is hinged to the forearm head (54), while the other end thereof is hinged to the outer wall of the outer arm (51); and by this means, the forearm head (54), outer arm (51) and forearm luffing cylinder (57) constitute a triangle luffing mechanism; **characterized in that**
a third levelling cylinder (58) is disposed between the telescopic connection component (5) and operation platform (3); and one end of the third levelling cylinder (58) is hinged to the inner arm (52), whereas the other end thereof is hinged to a rotary cylinder (33) secured onto the operation platform (5).

2. The aerial work platform as recited in claim 1, wherein an angle sensor cooperating with the third levelling cylinder (58)is provided on the rotary cylinder (33).

3. The aerial work platform as recited in claim 1, wherein a second levelling cylinder (56) is positioned between the forearm head (54) and telescopic connection component (5); one end of the second levelling cylinder (56) is hinged to the forearm head (54), while the other end thereof is hinged to the outer wall of the outer arm (51); and a cavity of the second levelling cylinder (56) communicates with a cavity of the third levelling cylinder (58) by means of an oil tube.

## Patentansprüche

1. Hubarbeitsbühne, die Folgendes umfasst:
ein Fahrzeug (1);
ein teleskopisches Übertragungsbauteil (2);
eine Betriebsplattform (3); und
ein teleskopisches Verbindungsbauteil (5) zum teleskopischen Verbinden des teleskopischen Übertragungsbauteils (2) und der Betriebsplattform (3) der Hubarbeitsbühne gemeinsam;
wobei das Fahrzeug (1), das teleskopische Übertragungsbauteil (2), das teleskopische Verbindungsbauteil (5) und die Betriebsplattform (3) bewegbar miteinander in Sequenz verbunden sind;
wobei das teleskopische Verbindungsbauteil (5) Folgendes umfasst: einen äußeren Arm (51), einen inneren Arm (52), der gleitbar innerhalb des äußeren Arms (51) angeordnet und fähig ist, von einem Ende des äußeren Arms (51) heraus bewegt zu werden, und einen Vorderarmteleskopzylinder (53), der zwischen dem äußeren Arm (51) und dem inneren Arm (52) angeordnet ist;
ein Tragelement, das zwischen dem Fahrzeug (1) und dem teleskopischen Übertragungsbauteil (2) angeordnet ist, und ein anderes Tragelement, das zwischen dem teleskopischen Übertragungsbauteil (2) und dem teleskopischen Verbindungsbauteil (5) platziert ist;
wobei das andere Tragelement, das zwischen dem teleskopischen Übertragungsbauteil (2) und dem teleskopischen Verbindungsbauteil (5) angeordnet ist, ein erster Ausgleichszylinder (55) ist; wobei ein Ende, das mit dem teleskopischen Übertragungsbauteil (2) des teleskopischen Verbindungsbauteils (5) verbunden ist, an einen Vorderarmkopf (54) angelenkt ist; und ein Ende des ersten Ausgleichszylinders (55) an das teleskopische Übertragungsbauteil (2) angelenkt ist, während das andere Ende an den Vorderarmkopf (54) angelenkt ist;
wobei das teleskopische Verbindungsbauteil (5) weiter einen Vorderarmeinziehzylinder (57) umfasst, von dem ein Ende an den Vorderarmkopf (54) angelenkt ist, während sein anderes Ende an der Außenwand des äußeren Arms (51) angelenkt ist; und durch dieses Mittel der Vorderarmkopf (54), der äußere Arm (51) und der Vorderarmeinziehzylinder (57) einen dreieckigen Einziehmechanismus bilden; **dadurch gekennzeichnet, dass**
ein dritter Ausgleichszylinder (58) zwischen dem teleskopischen Verbindungsbauteil (5) und der Betriebsplattform (3) angeordnet ist; und ein Ende des dritten Ausgleichszylinders (58) an dem inneren Arm (52) angelenkt ist, während das andere Ende davon an einen Drehzylinder (33), der auf der Betriebsplattform (5) befestigt ist, angelenkt ist.

2. Hubarbeitsbühne nach Anspruch 1, wobei ein Winkelsensor, der mit dem dritten Ausgleichszylinder (58) zusammenwirkt, auf dem Drehzylinder (33) vorgesehen ist.

3. Hubarbeitsbühne nach Anspruch 1, wobei ein zweiter Ausgleichszylinder (56) zwischen dem Vorderarmkopf (54) und dem teleskopischen Verbindungsbauteil (5) positioniert ist; ein Ende des zweiten Ausgleichszylinders (56) an dem Vorderarmkopf (54) angelenkt ist, während das andere Ende davon an der Außenwand des äußeren Arms (51) angelenkt ist; und ein Hohlraum des zweiten Ausgleichszylinders (56) mit einem Hohlraum des dritten Ausgleichszylinders (58) mittels eines Ölrohrs in Kommunikation steht.

## Revendications

1. Plate-forme de travail aérienne, comprenant:
un véhicule (1) ;
un composant de transmission télescopique (2) ;
une plate-forme d'exploitation (3) ; et
un composant de liaison télescopique (5) pour relier l'un à l'autre de manière télescopique le composant de transmission télescopique (2) et la plate-forme d'exploitation (3) de la plate-forme de travail aérienne ;
le véhicule (1), le composant de transmission télescopique (2), le composant de liaison télescopique (5) et la plate-forme d'exploitation (3) étant reliés de manière mobile les uns aux autres dans l'ordre ;
le composant de liaison télescopique (5) comprenant : un bras extérieur (51), un bras intérieur (52) disposé de manière à pouvoir coulisser à l'intérieur du bras extérieur (51) et apte à être sorti depuis une extrémité du bras extérieur (51), et un cylindre télescopique d'avant-bras (53) disposé entre le bras extérieur (51) et le bras intérieur (52) ;
un élément de support étant disposé entre le véhicule (1) et le composant de transmission télescopique (2), et un autre élément de support étant placé entre le composant de transmission télescopique (2) et le composant de liaison télescopique (5) ;
ledit un autre élément de support étant disposé entre le composant de transmission télescopique (2) et le composant de liaison télescopique (5) étant un premier cylindre de réglage de niveau (55) ; une extrémité, qui est reliée au composant de transmission télescopique (2), du composant de liaison télescopique (5) étant articulée au niveau d'une tête d'avant-bras (54) ; et une extrémité du premier cylindre de réglage de niveau (55) étant articulée au niveau du composant de transmission télescopique (2) tandis que l'autre extrémité est articulée au niveau de la tête d'avant-bras (54) ;
le composant de liaison télescopique (5) comprenant en outre un cylindre de levage d'avant-bras (57), dont une extrémité est articulée au niveau de la tête d'avant-bras (54), tandis que l'autre extrémité de celle-ci est articulée au niveau de la paroi extérieure du bras extérieur (51) ; et par ce moyen, la tête d'avant-bras (54), le bras extérieur (51) et le cylindre de levage d'avant-bras (57) constituent un mécanisme de levage en triangle ;
**caractérisé en ce que**
un troisième cylindre de réglage de niveau (58) est disposé entre le composant de liaison télescopique (5) et la plate-forme d'exploitation (3); et une extrémité du troisième cylindre de réglage de niveau (58) est articulée au niveau du bras intérieur (52) alors que l'autre extrémité de celui-ci est articulée au niveau d'un cylindre rotatif (33) fixé sur la plate-forme d'exploitation (5).

2. Plate-forme de travail aérienne selon la revendication 1, dans laquelle un capteur d'angle coopérant avec le troisième cylindre de réglage de niveau (58) est fourni sur le cylindre rotatif (33).

3. Plate-forme de travail aérienne selon la revendication 1, dans laquelle un deuxième cylindre de réglage de niveau (56) est positionné entre la tête d'avant-bras (54) et le composant de liaison télescopique (5); une extrémité du deuxième cylindre de réglage de niveau (56) est articulée au niveau de la tête d'avant-bras (54), alors que l'autre extrémité de celui-ci est articulée au niveau de la paroi extérieure du bras extérieur (51); et une cavité du deuxième cylindre de réglage de niveau (56) communique avec une cavité du troisième cylindre de réglage de niveau (58) au moyen d'un tube d'huile.
